(19) **Europäisches Patentamt**

**European Patent Office**

**Office européen des brevets**

(11) **EP 1 425 151 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(21) Anmeldenummer: 02754115.0

(22) Anmeldetag: **11.09.2002**

(51) Int Cl.⁷: $\text{B29C 47/40}$

(86) Internationale Anmeldenummer:
**PCT/CH2002/000500**

(87) Internationale Veröffentlichungsnummer:
**WO 2003/022550 (20.03.2003 Gazette 2003/12)**

(54) **VERFAHREN ZUR DURCHFUHRUNG KONTINUIERLICHER MISCH- UND AUFBEREITUNGSPROZESSE MITTELS SPEZIELLER VERHÄLTNISSE VON MANTELFLÄCHE UND FREIEM VOLUMEN BZW. SCHNECKENINNEN- UND AUSSENDURCHMESSER**

METHOD FOR CARRYING OUT CONTINUOUS MIXING AND PREPARATION PROCESSES BY MEANS OF SPECIAL RATIOS OF GENERATED SURFACES AND FREE VOLUMES OR THE INNER AND OUTER DIAMETERS OF ENDLESS SCREWS

PROCEDE DE MISE EN OEUVRE DE PROCESSUS CONTINUS DE MELANGE ET DE PREPARATION, GRACE A DES RAPPORTS SPECIAUX ENTRE LA SURFACE PERIPHERIQUE ET LE VOLUME LIBRE OU LE DIAMETRE INTERNE ET EXTERNE DE VIS

(84) Benannte Vertragsstaaten:
**AT BE BG CH CY CZ DE DK EE ES FI FR GB GR IE IT LI LU MC NL PT SE SK TR**

(30) Priorität: **11.09.2001 DE 10144748**
       **03.09.2002 DE 10241117**

(43) Veröffentlichungstag der Anmeldung:
**09.06.2004 Patentblatt 2004/24**

(73) Patentinhaber: **Bühler AG**
**9240 Uzwil (CH)**

(72) Erfinder:
• **STURM, Achim-Philipp**
**CH-9244 Niederuzwil (CH)**

• **SCHWEIKLE, Jürgen**
**9527 Niederhelfenschwil (DE)**
• **CHRISTEL, Andreas**
**CH-9524 Zuzwil (CH)**
• **NÄF, Christoph**
**CH-8400 Winterthur (CH)**
• **INNEREBNER, Federico**
**CH-8049 Zürich (CH)**

(74) Vertreter: **Frommhold, Joachim**
**Bühler AG**
**Patentabteilung**
**9240 Uzwil (CH)**

(56) Entgegenhaltungen:
**US-A1- 2002 060 378      US-A1- 2002 137 838**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf einen Extruder und ein Verfahren für die kontinuierliche Aufbereitung eines Produktes mittels eines gleichsinnig drehenden, mehrwelligen Extruders gemäss dem Oberbegriff von Anspruch 1.

Ein derartiges Verfahren ist z.B. in der DE 195 36 289 C2 beschrieben. Das darin beschriebene Verfahren kann für die Verarbeitung von Kunststoffen, insbesondere von Harzen und zähplastischen Massen, auf einem Zweiwellen-Extruder angewendet werden. Um thermische, thermisch-chemische und rein mechanische Beeinträchtigungen der Produktqualität während der Verarbeitung des Produktes gering zu halten, wird bei diesem Verfahren die Verweilzeit des Produktes im Extruder gering gehalten. Dies wird erreicht, indem man bei hohen Drehzahlen in Verbindung mit hohen Drehmomentdichten, hohe Durchsätze verarbeitet. Gleichzeitig bleibt aber das freie Volumen (Prozessraumvolumen) im Extruder unverändert hoch.

Die hierbei auftretende mechanische und thermische Produktbelastung kann insbesondere bei der Verarbeitung von Polykondensaten, wie z.B. Polyestern, oder Elastomeren, wie z.B. Kautschukmischungen, jedoch zu inakzeptabel hohen Produktschädigungen führen.

Der vorliegenden Erfindung liegt daher die Aufgabe zugrunde, ein Verfahren der eingangs genannten Art bereitzustellen, das sich insbesondere für die Aufbereitung und Verarbeitung hochviskoser Produkte (wie z.B. Polymeren; Emulsionen, etc.) eignet, bei denen durch zu hohe Temperaturen und/oder zu hohe Verweilzeiten im Extruder im Verlaufe des Prozesses qualitätsmindernde Veränderungen am Produkt auftreten.

Diese Aufgabe wird erfindungsgemäss durch Verwendung eines Extruders gemäss Anspruch 1 gelöst. Entscheidend ist dabei, dass die Verweilzeit des Produktes im Extruder ohne die Notwendigkeit für extrem hohe Drehzahlen reduziert wird, was durch eine Reduktion des freien Volumens (Prozessraumvolumen) im Extruder erreicht wird.

Bei dem Verfahren unter Verwendung eines Extruders gemäss Anspruch 1 ist der Verfahrensraum mit einer glatten Mantelfläche Am (Gehäusefläche), einem freien Volumen Vf sowie dem Schneckenwellenaussendurchmesser Da und dem Schneckenwelleninnendurchmesser Di der sich nur um ihre jeweils eigene Achse gleichsinnig drehenden und ebenfalls eine glatte Oberfläche aufweisenden Schneckenwellen derart gestaltet, dass mindestens ein Teil der Verfahrenszone ein Verhältnis $Am^3/Vf^2$ zwischen 1020 und 3050 für zweigängige Schneckenelemente bei einem Verhältnis Da/Di = 1,3 bis 1,7 aufweist. Das freie Volumen Vf bezeichnet hierbei die Aufnahmekapazität der zugeführten Komponenten. Jeder Volumeneinheit des Produktes steht eine grosse Oberfläche zur Kühlung/Heizung und zur Entgasung des Produktes zur Verfügung, wodurch eine schonende Behandlung der eingebrachten Edukte und damit eine hohe Qualität des Endproduktes ermöglicht wird. Durch die glatte Mantelfläche des Extruder-Prozessraumes und durch die ebenfalls glatte Oberfläche der selbstreinigenden Schneckenwellen ist die Fähigkeit zur vollständigen Selbstreinigung des Extruders gewährleistet.

Eine schonende Bearbeitung der Edukte wird erreicht mittels einer Vielzahl von Schneckenwellen mit einem möglichst kleinen Schneckenwellendurchmesser, gekoppelt mit tiefen Drehzahlen von bis zu 600 Upm. Die hierbei entstehenden Scher- und Knetkräfte wirken schonend auf das Produkt ein. Aufgrund der Vielzahl an Schneckenwellen resultiert eine kurze Verfahrensteillänge mit einem hohen Verhältnis zwischen Oberfläche und freiem Volumen.

Für einen Vergleich mit anderen Mischaggregaten, muss das gleiche freie Volumen zu Grunde gelegt werden.

Das Verhältnis zwischen Oberfläche und freiem Volumen bezieht sich auf den Zustand bei gleichen freien Volumen, verglichen mit anderen Mischaggregaten.

Zweckmässigerweise leitet man in den Extruder eine Drehmomentdichte (Drehmoment pro Schnekke / Achsabstand³) von mindestens 7 Nm/cm³ und insbesondere von mindestens 9 Nm/cm³ ein. Die grössere Drehmomentdichte erlaubt einen höheren Leistungseintrag bei gleicher Drehzahl; ergibt somit mehr Durchsatz und daraus resultierend eine kürzere Verweilzeit, wodurch sich die Erhitzung der zugeführten Edukte im Verlaufe des Verfahrens verringert und somit eine geringere thermische Produktschädigung erzielt werden kann.

In Verbindung mit einem hohen Antriebsdrehmoment kann ein hoher Durchsatz und damit eine geringe Verweilzeit realisiert werden, was sich positiv auf die Produkttemperatur auswirkt.

Vorzugsweise wählt man für das Verhältnis Da/Di = 1,5 bis 1,63.

Besonders vorteilhaft ist es, wenn man das Verhältnis $Am^3/Vf^2$ derart wählt, dass bei zweigängigen Schneckenelementen $1500 < Am^3/Vf^2 < 2030$ ist.

Vorteilhafterweise handelt es sich bei dem zu bearbeitenden Edukt um ein verunreinigtes und/oder feuchtes Polykondensat, insbesondere um einen Polyester wie Polyester-Rezyklat. Das Polyester-Rezyklat kann z.B. PET-Flaschenrezyklat sein. Das erfindungsgemässe Verfahren ist hierfür besonders vorteilhaft, da durch die grosse spezifische Oberfläche die Trocknung und Entgasung des Produktes begünstigt wird, so dass ungewollte flüchtige Bestandteile des Polykondensats in hohem Masse entfernt werden. Besonders wesentlich ist dabei die Entfernung von Wassermolekülen aus dem Polykondensat, die zur Hydrolyse der Kettenmoleküle und damit zur Absenkung der intrinsischen Viskosität des Polykondensats führen. Die grosse spezifische Oberfläche und dadurch bedingt die verbesserte Kühlung des Produktes und das verbesserte Ausgasen eventueller oxidativer Verunreinigungen verringert auch den rein thermischen als auch thermisch-oxidativen Abbau der Kettenmoleküle. Insgesamt ergibt sich eine schonendere Behandlung und damit hohe Qualität des Produktes und somit eine hohe Wirtschaftlichkeit des Verfahrens.

Besonders vorteilhaft ist es, wenn mindestens ein Teil der Verfahrenszone ein Verhältnis $Am^3/Vf^2$ zwischen 1020 und 3050 für zweigängige Schneckenelemente aufweist und dass es sich bei einer der zugeführten Komponenten um ein Elastomer handelt.

Aufgrund des hohen Anteils an Zwickelbereichen ergibt sich eine höhere Oberflächenbildungsrate zur Benetzung der zugeführten Komponenten, insbesondere des Elastomers mit Weichmacher. Auch hier ist durch die grosse spezifische Oberfläche eine grosse Kühlfläche gegeben, was zusammen mit dem hohen Durchsatz und den hohen axialen Geschwindigkeiten in den Zwickelbereichen letztendlich zu einer schonenden Bearbeitung der Komponenten führt. Niedrige Drehzahlen der Schneckenwellen, hohe Drehmomentdichten in Verbindung eines kleinen freien Volumens und einen ausreichend hohen Durchsatz ergeben weniger hohe Temperaturen im Prozess.

Bei einer weiteren vorteilhaften Ausführung des erfindungsgemässen Verfahrens ist das Verhältnis $Am^3/Vf^2$ zwischen 1500 und 2300 für zweigängige Schneckenelemente.

Vorteilhafterweise handelt es sich bei dem Elastomer um ein pulverförmiges oder granuliertes Elastomer, in welchem bereits ein Füllstoff eingebunden ist, wie z.B. bei Pulverkautschuk.

Weiterhin vorteilhaft ist die dichtkämmende Ausführung der Schneckenelemente, die mit ihrem Selbstreinigungseffekt zur geringeren thermischen Belastung des Produktes beitragen.

Vorzugsweise wird das erfindungsgemässe Verfahren mit einem Extruder durchgeführt, der mindestens vier einzeln angetriebene Schneckenwellen besitzt.

Eine weitere kühltechnische Verbesserung erreicht man, wenn man einen Extruder mit einem temperierbaren Kern und einem temperierbaren Gehäuse verwendet, die sich beide nicht bewegen, wobei je nach Bedarf der Kern und das Gehäuse auch separat temperiert werden können. Zweckmässigerweise sind hierfür die Gehäuse in separat temperierbare Segmente unterteilt.

Das erfindungsgemässe Verfahren kann auch auf einem Extruder durchgeführt werden, dessen Schneckenwellen kranzförmig, insbesondere ringförmig, angeordnet sind.

Zweckmässigerweise wird das Polykondensat im Verlaufe des erfindungsgemässen Verfahrens aufgeschmolzen und später wieder verfestigt, wobei die Gesamtzeit, während der die Temperatur des Polykondensats im Verlaufe des Verfahrens über der Schmelztemperatur des Polykondensats liegt, weniger als etwa 60 Sekunden, vorzugsweise weniger als etwa 30 Sekunden, beträgt. Für eventuell ablaufende hydrolytische Abbaureaktionen steht somit nur wenig Zeit zur Verfügung. Dadurch wird ermöglicht, selbst mit einem an sich hohen Restwassergehalt in der Schmelze von mehr als 200 ppm zu arbeiten, ohne eine IV-Verringerung von mehr als 0,05 dl/g in Kauf nehmen zu müssen.

Das Polykondensat kann in seiner Ausgangsform als Schüttmaterial mit einer Schüttdichte im Bereich von 200 $kg/m^3$ bis 600 $kg/m^3$ vorliegen, und zwar insbesondere in Form von Flocken oder Schnitzeln.

Zweckmässigerweise wird dabei das Polykondensat-Ausgangsmaterial vor dem Aufschmelzen teilweise vorgetrocknet. Dadurch kann durch Kombination der wenig aufwendigen teilweisen Trocknung mit der kurzen Verweilzeit im geschmolzenen Zustand ein Endprodukt mit geringem IV-Abbau erhalten werden. Vorzugsweise weist das Verfahren einen Entgasungsschritt zum Entfernen flüchtiger Verunreinigungen und/oder Zerfallsprodukte aus dem Polykondensat auf.

Vorzugsweise wird das Polykondensat in den Extruder im festen Zustand eingebracht, und das Polykondensat wird auf eine Temperatur unterhalb des Schmelzpunktes erwärmt, wobei das Polykondensat entgast und/oder getrocknet wird. Das Entgasen und/oder Trocknen des Polykondensats im festen Zustand erfolgt hier bei einem Druck unterhalb des atmosphärischen Drucks und/oder unter Zugabe eines Inertgases.

Insbesondere zeichnet sich das erfindungsgemässe Verfahren dadurch aus, dass sich die Gesamtzeit, während der das Polykondensat im Verlaufe des Verfahrens als Schmelze vorliegt, aus einem ersten Zeitabschnitt, während dem das Polykondensat nach dem Aufschmelzen im Extruder noch im Extruder verweilt, und aus einem zweiten Zeitabschnitt, während dem das noch geschmolzene Polykondensat ausserhalb des Extruders bearbeitet wird, zusammensetzt, wobei der erste Zeitabschnitt vorzugsweise weniger als etwa 15 Sekunden beträgt. Besonders vorteilhaft ist eine Verweilzeit der Schmelze im Extruder von weniger als etwa 10 Sekunden.

Die Bearbeitung des geschmolzenen Polykondensats ausserhalb des Extruders kann den Schritt der Schmelzefiltration zur Abscheidung von Verunreinigungspartikeln enthalten. Zum Aufbau des notwendigen Druckes wird vorzugsweise eine Schmelzepumpe eingesetzt. Dazu müssen die Schmelzepumpe und der Schmelzefilter so in den Prozess integriert werden, dass die erfindungsgemässe kurze Verweilzeit eingehalten wird.

Das Polykondensat kann dann beim Verfestigen zu einem aus Pellets bestehendem Granulat verarbeitet werden.

Die Erfindung liefert daher ein Verfahren, in welchem viskose und viskoelastische Stoffe wie z.B. Thermoplaste und Elastomere in möglichst schonender Weise und mit möglichst hoher Durchsatzmenge verarbeitet werden können, um die Qualität des Endproduktes zu erhöhen und die Wirtschaftlichkeit des gesamten Prozesses zu steigern. Erfindungsgemäss können wichtige Prozessaufgaben wie Mischen, Kühlen/Heizen (Wärmeaustausch) und Entgasen (Stoffaustausch) gleichzeitig und mit hoher Effizienz ausgeführt werden.

Als Anlage zur Durchführung des Verfahrens eignet sich z.B. ein gleichsinnig drehender Mehrwellenextruder, insbesondere ein ringförmiger 12-Wellenextruder, wobei auch andere Bauformen, wie nicht-ringförmige Mehrwellenextruder oder ringförmige Mehrwellenextruder mit anderen Wellenzahlen, einsetzbar sind.

Die Wirtschaftlichkeit des erfindungsgemässen Verfahrens verbessert sich, wenn für eine Prozessaufgabe bei möglichst kleiner Baugrösse der Verarbeitungsmaschine eine möglichst hohe Verarbeitungsmenge (hoher Durchsatz) erzielt wird.

Eine schonende Behandlung des Produktes führt unter anderem zur Verbesserung folgender Qualitätsmerkmale:

> Schädigungsgrad des Endproduktes z.B. geringe thermische Produktschädigung

> Güte der mechanischen Eigenschaften des Endproduktes, z.B. guter Dispersionsgrad.

Eine schonende Bearbeitung des Produktes wird unter anderem erreicht durch:

> notwendig hohe, aber gleichmässige Scherbeanspruchung

> eine kurze Verweilzeit im Extruder

> einen hohen Durchsatz

> ein hohes Verhältnis spezifische Oberflächen/ freies Volumen ($Am^3/Vf^2$)

> ein enges Verweilzeitspektrum aufgrund des Einsatzes selbstreinigender Schneckenelemente.

Die Erfindung liegt in dem Einsatz der hohen Drehmomentdichte, mit welcher erst die hohen Durchsätze realisiert werden können, welche für die Produktqualität verantwortlich sind.

Die Prozessaufgaben lassen sich erfindungsgemäss mit hoher Effizienz ausführen, unter anderem durch:

> eine häufige Umschichtung des Materials

> ein hohes Verhältnis spezifische Oberfläche/ freies Volumen ($Am^3/VF^2$) bei gleichzeitig hoher Oberflächenbildungsrate (Wärme- und Stoffaustausch).

Bei einem Mehrwellenextruder, welcher diesem Verfahren zugrunde gelegt wird, liegt eine grosse Anzahl von Zwickeln vor, während das freie Volumen sehr gering gehalten wird. Ein Vorteil dieser Maschinen liegt in einer besseren Verteilung, Zerteilung und Umschichtung des Produktes.

Von den Erfindern der vorliegenden Erfindung wurde ein Vergleich durchgeführt zwischen dem erfindungsgemässen Verfahren auf einem ringförmigen 12-Wellenextruder und einem Verfahren auf einem Zweiwellenextruder.

Bei einem 12-Wellenextruder wird pro Umdrehung der Schnecke das Material 12-mal mehr als bei einem Zweiwellenextruder umgeschichtet. Das Umschichtverhältnis U vom 12-Wellen- zum Zweiwellenextruder beträgt also:

$$U = 12:1$$

Die Verteilung, Zerteilung und Umschichtung des Produktes werden durch die dimensionslose Kennzahl aus dem Verhältnis der Zwickelfläche$^3$, $Az^3$, zum freien Volumen$^2$, $Vf^2$, charakterisiert.

Die Temperierungs- und Entgasungsleistung des Verfahrens wird durch die dimensionslose Kenzahl aus dem Verhältnis der Oberfläche$^3$ ($Am^3$) zum freien Volumen$^2$ ($Vf^2$) charakterisiert.

Bei einem Mehrwellenextruder liegen grosse Oberflächen (Schnecken- und Gehäuseoberfläche) vor, während das freie Volumen sehr gering gehalten wird. Ein weiterer Vorteil des Verfahrens auf dieser Maschine liegt deshalb in der Ausnutzung des hohen Verhältnisses spezifische Oberfläche/Volumen.

Diese dimensionslose Kennzahl wird mit dem Verhältnis der Bohrungsoberfläche$^3$, $Am^3$, und dem freien Volumen$^2$, $Vf^2$, gebildet.

Versuche mit einem ringförmigen 12-Wellenextruder zeigten die Eignung dieser Maschine für Prozesse, bei denen eine gute Ver- und Zerteilung, Umschichtung, Kühlung und Entgasung elementar sind.

### Patentansprüche

**1.** Mehrwellen-Extruder mit mehreren gleichsinnig drehenden, vollständig selbstreinigenden Schneckenwellen, die jeweils in einer Bohrung angeordnet sind und dessen Verfahrensraum eine durch glatte Bohrungsoberflächen gebildete Mantelfläche Am und ein zwischen den Wellen und den Bohrungen gebildetes freies Volumen Vf hat und dessen ebenfalls eine glatte Oberfläche aufweisenden Schneckenwellen sich nur um ihre jeweilige Achse drehen, wobei die Schneckenelemente am Schneckensteg einen Aussendurchmesser Da und am Schneckengrund einen Innendurchmesser Di haben, **dadurch gekennzeichnet, dass** der Extruder mindestens vier einzeln angetriebene Schneckenwellen besitzt, und dass mindestens ein Teil der Verfahrenszone ein Verhältnis $Am^3/Vf^2$ zwischen 1020 und 3050 für zweigängige Schneckenelemente bei einem Verhältnis Da/Di = 1,3 bis 1,7 aufweist.

**2.** Extruder nach Anspruch 1, **dadurch gekennzeichnet, dass** das Verhältnis Da/Di = 1,5 bis 1,63 ist.

**3.** Extruder nach Anspruch 1 oder 2, **dadurch gekennzeichnet, dass** das jeweilige Verhältnis bei zweigängigen Schneckenelementen $1500 < Am^3/Vf^2 < 2030$ ist.

**4.** Extruder nach einem der Ansprüche 1 bis 3, **dadurch gekennzeichnet, dass** das Verhältnis $Am^3/Vf^2$ zwischen 1500 und 2300 bei zweigängigen Schneckenelementen ist.

**5.** Verfahren zum kontinuierlichen Aufbereiten eines verunreinigten und/oder feuchten Polykondensats, **dadurch gekennzeichnet, dass** es mittels eines Mehrwellen-Extruders gemäss Anspruch 1 bis 4 durchgeführt wird.

**6.** Verfahren nach Anspruch 5, **dadurch gekennzeichnet, dass** in den Extruder eine Drehmomentdichte (Drehmoment pro Schnecke / Achsabstand$^3$) von mindestens 7 Nm/cm$^3$ eingeleitet wird.

**7.** Verfahren nach Anspruch 3, **dadurch gekennzeichnet, dass** in den Extruder eine Drehmomentdichte (Drehmoment pro Schnecke / Achsabstand$^3$) von mindestens 9 Nm/cm$^3$ eingeleitet wird.

**8.** Verfahren nach einem der Ansprüche 5 bis 7, **dadurch gekennzeichnet, dass** es sich bei dem zu bearbeitenden Polykondensat um Polyester handelt.

**9.** Verfahren nach Anspruch 8, **dadurch gekennzeichnet, dass** es sich bei dem zu bearbeitenden Polykondensat um ein Polyester-Rezyklat, insbesondere PET-Flaschen-Rezyklat handelt.

**10.** Verfahren zum kontinuierlichen Aufbereiten eines Elastomers, **dadurch gekennzeichnet, dass** es mittels eines Mehrwellen-Extruders gemäss Anspruch 1 bis 4 durchgeführt wird.

**11.** Verfahren nach Anspruch 10, **dadurch gekennzeichnet, dass** es sich bei dem Elastomer um ein pulverförmiges oder granuliertes Elastomer handelt, in welchem bereits mindestens ein Füllstoff eingebunden ist.

**12.** Mehrwellen-Extruder nach einem der Ansprüche 1 bis 4, **dadurch gekennzeichnet, dass** die Schneckenelemente dichtkämmend sind.

**13.** Mehrwellen-Extruder nach einem der Ansprüche 1 bis 4 oder nach Anspruch 12, **dadurch gekennzeichnet, dass** der Extruder einen temperierbaren Kern und temperierbare Gehäuse besitzt, die sich nicht bewegen.

**14.** Mehrwellen-Extruder nach Anspruch 13, **dadurch gekennzeichnet, dass** der Kern und die Gehäuse separat temperierbar sind.

**15.** Mehrwellen-Extruder nach einem der Ansprüche 13 oder 14, **dadurch gekennzeichnet, dass** die Gehäuse in Segmente unterteilt sind, welche separat temperierbar sind.

**16.** Mehrwellen-Extruder nach einem der Ansprüche 12 bis 15, **dadurch gekennzeichnet, dass** bei dem Extruder die Schneckenwellen kranzförmig, insbesondere ringförmig, angeordnet sind.

**17.** Verfahren nach einem der Ansprüche 5 bis 7, **dadurch gekennzeichnet, dass** das Polykondensat im Verlaufe des Verfahrens aufgeschmolzen und später wieder verfestigt wird, wobei die Gesamtzeit, während der die Temperatur des Polykondensats im Verlaufe des Verfahrens über der Schmelztemperatur des Polykondensats liegt, weniger als etwa 60 Sekunden beträgt.

**18.** Verfahren nach Anspruch 17, **dadurch gekennzeichnet, dass** die Gesamtzeit, während der die Temperatur des Polykondensats im Verlaufe des Verfahrens über der Schmelztemperatur des Polykondensats liegt, weniger als etwa 30 Sekunden beträgt.

**19.** Verfahren nach Anspruch 17 oder 18, **dadurch gekennzeichnet, dass** der Restwassergehalt in der Schmelze grösser als 200 ppm ist.

**20.** Verfahren nach einem der Ansprüche 17 bis 19, **dadurch gekennzeichnet, dass** das Polykondensat in seiner Ausgangsform als Schüttmaterial mit einer Schüttdichte im Bereich von 200 kg/m$^3$ bis 600 kg/m$^3$ vorliegt.

**21.** Verfahren nach einem der Ansprüche 17 bis 20, **dadurch gekennzeichnet, dass** das Polykondensat in Form von Flocken oder Schnitzeln vorliegt.

**22.** Verfahren nach einem der Ansprüche 17 bis 21, **dadurch gekennzeichnet, dass** das Polykondensat-Ausgangsmaterial vor dem Aufschmelzen teilweise vorgetrocknet wird.

**23.** Verfahren nach einem der Ansprüche 17 bis 22, **dadurch gekennzeichnet, dass** es einen Entgasungsschritt zum Entfernen flüchtiger Verunreinigungen und/oder Zerfallsprodukte aus der Polykondensatschmelze aufweist.

**24.** Verfahren nach einem der Ansprüche 17 bis 23, **da-**

**durch gekennzeichnet, dass** das Polykondensat in einen Extruder im festen Zustand eingebracht wird, das Polykondensat auf eine Temperatur unterhalb des Schmelzpunktes erwärmt wird und das Polykondensat entgast und/oder getrocknet wird, wobei das Entgasen und/oder Trocknen des Polykondensats im festen Zustand bei einem Druck unterhalb des atmosphärischen Drucks und/oder unter Zugabe eines Inertgases erfolgt.

25. Verfahren nach Anspruch 24, **dadurch gekennzeichnet, dass** die Gesamtzeit, während der das Polykondensat im Verlaufe des Verfahrens als Schmelze vorliegt, einen ersten Zeitabschnitt, während dem das Polykondensat nach dem Aufschmelzen im Extruder noch im Extruder verweilt, und einen zweiten Zeitabschnitt, während dem das noch geschmolzene Polykondensat ausserhalb des Extruders bearbeitet wird, aufweist.

26. Verfahren nach Anspruch 25, **dadurch gekennzeichnet, dass** die Dauer des ersten Zeitabschnitts weniger als etwa 15 Sekunden beträgt.

27. Verfahren nach Anspruch 25, **dadurch gekennzeichnet, dass** die Dauer des ersten Zeitabschnitts weniger als etwa 10 Sekunden beträgt.

28. Verfahren nach einem der Ansprüche 24 bis 27, **dadurch gekennzeichnet, dass** die Bearbeitung des geschmolzenen Polykondensates ausserhalb des Extruders eine Schmelzefiltration beinhaltet.

29. Verfahren nach einem der Ansprüche 24 bis 28, **dadurch gekennzeichnet, dass** die Bearbeitung des geschmolzenen Polykondensates ausserhalb des Extruders die Verwendung einer Schmelzepumpe beinhaltet.

30. Verfahren nach einem der Ansprüche 17 bis 29, **dadurch gekennzeichnet, dass** das Polykondensat beim Verfestigen zu einem aus Pellets bestehenden Granulat verarbeitet wird.

**Claims**

1. A multi-screw extruder with several completely self-cleaning screw shanks rotating in the same direction, which are each arranged in a single borehole, and whose process space has a jacket surface Am formed by smooth borehole surfaces and a free volume Vf formed between the screws and the boreholes, and whose screw shanks also having a smooth surface only turn around their respective axes, wherein the screw elements have an outer diameter Da at the screw thread, and an inner diameter Di at the screw base, **characterized in that** the extruder has at least four individually driven screw shanks, and that at least a portion of the process zone has an $Am^3/Vf^2$ ratio between 1020 and 3050 for two-flighted screw elements at a Da/Di ratio of 1.3 to 1.7.

2. The extruder according to claim 1, **characterized in that** the Da/Di ratio is 1.5 to 1.63.

3. The extruder according to claim 1 or 2, **characterized in that** the respective ratio is between 1500 and 2030 for two-flighted screw elements.

4. The extruder according to claim 1 or 2, **characterized in that** the $Am^3/Vf^2$ ratio is between 1500 and 2300 for two-flighted screw elements.

5. A method for continuously preparing a contaminated and/or moist polycondensate, **characterized in that** it is executed by means of a multi-screw extruder according to claims 1 to 4.

6. The method according to claim 5, **characterized in that** a torque density (torque per screw/axial distance$^3$) of at least 7 Nm/cm$^3$ is introduced into the extruder.

7. The method according to claim 3, **characterized in that** a torque density (torque per screw/axial distance$^3$) of at least 9 Nm/cm$^3$ is introduced into the extruder.

8. The method according to one of claims 5 to 7, **characterized in that** the polycondensate to be processed is polyester.

9. The method according to claim 8, **characterized in that** the polycondensate to be processed is recycled polyester, in particular recycled PET bottles.

10. A method for continuously preparing an elastomer, **characterized in that** it is executed by means of a multi-screw extruder according to claims 1 to 4.

11. The method according to claim 10, **characterized in that** the elastomer is a powdered or granulated elastomer, which already incorporates at least one filler.

12. The multi-screw extruder according to one of claims 1 to 4, **characterized in that** the screw elements are tightly intermeshing.

13. The multi-screw extruder according to one of claims 1 to 4, or according to claim 12, **characterized in that** the extruder has a temperature-adjustable core and temperature adjustable casing that do not move.

**14.** The multi-screw extruder according to claim 13, **characterized in that** the core and casing can be separately temperature adjusted.

**15.** The multi-screw extruder according to one of claims 13 or 14, **characterized in that** the casings are divided into segments that can be separately temperature adjusted.

**16.** The multi-screw extruder according to one of claims 12 to 15, **characterized in that** the screw shanks in the extruder are arranged as a rim, in particular in a ring.

**17.** The method according to one of claims 5 to 7, **characterized in that** the polycondensate is melted open during the method and then solidified again, wherein the overall time for which the temperature of the polycondensate remains over the melting point of the polycondensate during the course of the procedure measures less than about 60 seconds.

**18.** The method according to claim 17, **characterized in that** the overall time for which the temperature of the polycondensate remains over the melting point of the polycondensate during the course of the procedure measures less than about 30 seconds.

**19.** The method according to claim 17 or 18, **characterized in that** the residual water content in the melt exceeds 200 ppm.

**20.** The method according to one of claims 17 to 19, **characterized in that** the polycondensate in its initial form is present as a loose material with an apparent density ranging from 200 kg/m$^3$ to 600 kg/m$^3$.

**21.** The method according to one of claims 17 to 20, **characterized in that** the polycondensate is present in the form of flakes or chips.

**22.** The method according to one of claims 17 to 21, **characterized in that** the initial polycondensate material is partially predried before melted.

**23.** The method according to one of claims 17 to 22, **characterized in that** it has a degassing step for removing volatile contaminants and/or decomposition products from the polycondensate melt.

**24.** The method according to one of claims 17 to 23, **characterized in that** the polycondensate is introduced into an extruder while sold, the polycondensate is heated to a temperature of below the melting point, and the polycondensate is degassed and/or dried, wherein the polycondensate is degassed and/or dried while solid at a pressure under atmospheric pressure and/or while adding an inert gas.

**25.** The method according to claim 24, **characterized in that** the overall time for which the polycondensate is present as a melt during the procedure consists of a first interval in which the polycondensate still remains in the extruder after melted in the extruder, and a second interval in which the still melted polycondensate is processed outside of the extruder.

**26.** The method according to claim 25, **characterized in that** the first interval lasts for less than about 15 seconds.

**27.** The method according to claim 25, **characterized in that** the first interval lasts for less than about 10 seconds.

**28.** The method according to one of claims 24 to 27, **characterized in that** the melted polycondensate is processed outside the extruder via melt filtration.

**29.** The method according to one of claims 24 to 28, **characterized in that** the melted polycondensate is processed outside the extruder by using a melt pump.

**30.** The method according to one of claims 17 to 29, **characterized in that** the polycondensate is processed into a granulate consisting of pellets during the solidification process.

**Revendications**

**1.** Extrudeuse à arbres multiples, avec plusieurs arbres à vis rotatifs dans le même sens, entièrement autonettoyants, qui sont respectivement disposés dans un alésage et dont l'espace de procédé dispose d'une surface d'enveloppe AM formée par une surface d'alésage lisse et d'un volume libre Vf formé entre les arbres et les alésages et dont les arbres à vis qui présentent également une surface lisse ne sont rotatifs qu'autour de leur axe respectif, les éléments de la vis présentant sur l'arête de la vis un diamètre extérieur Da et sur le fond de la vis un diamètre intérieur Di, **caractérisée en ce que** l'extrudeuse est munie d'au moins quatre arbres à vis à entraînement individuel et qu'au moins une partie de la zone de procédé présente un rapport Am$^3$/Vf$^2$ compris entre 1020 et 3050 pour des éléments de vis à filet double pour un rapport Da/Di = 1,3 à 1,7.

**2.** Extrudeuse selon la revendication 1, **caractérisée en ce que** le rapport Da/Di est de 1,5 à 1,63.

**3.** Extrudeuse selon la revendication 1 ou 2, **caracté-**

**risée en ce que** le rapport respectif pour des éléments de vis à filet double Am$^3$/Vf$^2$ est compris entre 1500 et 2030.

4. Extrudeuse selon la reventication 1 ou 2, **caractérisée en ce que** le rapport Am$^3$/Vf$^2$ est compris entre 1500 et 2300 pour des éléments de vis à filet double.

5. Procédé pour la préparation continue d'un polycondensat impur et/ou humide, **caractérisé en ce qu'**il est réalisé à l'aide d'une extrudeuse à arbres multiples selon la revendication 1 à 4.

6. Procédé selon la revendication 5, **caractérisé en ce qu'**on introduit dans l'extrudeuse un couple de densité d'au moins 7 Nm/cm$^3$ (couple par vis/entraxe$^3$).

7. Procédé selon la revendication 3, **caractérisé en ce qu'**on introduit dans l'extrudeuse un couple de densité d'au moins 9 Nm/cm$^3$ (couple par vis/entraxe$^3$).

8. Procédé selon l'une quelconque des revendications 5 à 7, **caractérisé en ce que** le polycondensat à traiter est du polyester.

9. Procédé selon la revendication 8, **caractérisé en ce que** le polycondensat à traiter est un polyester recyclé, notamment des bouteilles de PET recyclées.

10. Procédé pour la préparation continue d'un élastomère, **caractérisé en ce qu'**il est réalisé à l'aide d'une extrudeuse à arbres multiples selon la revendication 1 à 4.

11. Procédé selon la revendication 10, **caractérisé en ce que** l'élastomère est un élastomère pulvérulent ou granulé, dans lequel au moins une matière de charge est intégrée.

12. Extrudeuse à arbres multiples selon l'une des revendications 1 à 4, **caractérisée en ce que** les éléments de la vis sont à engrenage compact.

13. Extrudeuse à arbres multiples selon l'une des revendications 1 à 4, **caractérisée en ce que** l'extrudeuse est munie d'un noyau témpérable et d'un carter témpérable, qui sont immobiles.

14. Extrudeuse à arbres multiples selon la revendication 13, **caractérisée en ce que** le noyau et le carter sont témpérables séparément.

15. Extrudeuse à arbres multiples selon l'une quelconque des revendications 13 ou 14, **caractérisée en**

**ce que** les carters sont divisés en segments, qui sont témpérables séparément.

16. Extrudeuse à arbres multiples selon l'une quelconque des revendications 12 à 15, **caractérisée en ce que** sur l'extrudeuse, les arbres à vis sont placés sous forme de couronne, notamment sous forme annulaire.

17. Procédé selon l'une quelconque des revendications 5 à 7, **caractérisé en ce qu'**au cours du procédé, le polycondensat est fondu et qu'ultérieurement, il redurcit, la période globale au cours de laquelle la température du polycondensat est supérieure à la température de fusion du polycondensat au cours du procédé étant inférieure à environ 60 secondes.

18. Procédé selon la revendication 17, **caractérisé en ce que** la période totale au cours de laquelle la température du polycondensat est supérieure à la température de fusion du polycondensat au cours du procédé est inférieure à 30 secondes.

19. Procédé selon la revendication 17 ou 18, **caractérisé en ce que** la teneur en eau résiduelle dans la masse fondue est supérieure à 200 ppm.

20. Procédé selon l'une quelconque des revendications 17 à 19, **caractérisé en ce que** dans sa forme initiale, le polycondensat est présent sous la forme d'une matière en vrac, avec une densité apparente située dans la fourchette de 200 kg/m$^3$ à 600 kg/m$^3$.

21. Procédé selon l'une quelconque des revendications 17 à 20, **caractérisé en ce que** le polycondensat est présent sous la forme de flocons ou de rognures.

22. Procédé selon l'une quelconque des revendications 17 à 21, **caractérisé en ce que** le matériau initial des polycondensats est partiellement soumis à un préséchage, avant sa fusion.

23. Procédé selon l'une quelconque des revendications 17 à 22, **caractérisé en ce qu'**il présente une étape de dégazage pour l'élimination des impuretés volatiles et/ou des produits de décomposition hors des polycondensats en fusion.

24. Procédé selon l'une quelconque des revendications 17 à 23, **caractérisé en ce que** le polycondensat est introduit dans une extrudeuse à l'état de solide, que le polycondensat est réchauffé à une température inférieure au point de fusion et que le polycondensat est dégazé et/ou séché, le dégazage et/ou le séchage du polycondensat à l'état de solide étant réalisés sous une pression inférieure à la pression atmosphérique et/ou sous adjonction d'un gaz inerte.

**25.** Procédé selon la revendication 24, **caractérisé en ce que** la période totale, au cours de laquelle le polycondensat est présent sous la forme d'une masse en fusion pendant le procédé présente un premier intervalle, au cours duquel le polycondensat séjourne encore dans l'extrudeuse, à l'issue de sa fusion dans l'extrudeuse et un second intervalle, au cours duquel le polycondensat encore fondu est traité à l'extérieur de l'extrudeuse.

**26.** Procédé selon la revendication 25, **caractérisé en ce que** la période du premier intervalle de temps est inférieure à 15 secondes environ.

**27.** Procédé selon la revendication 25, **caractérisé en ce que** la période du premier intervalle de temps est inférieure à 10 secondes environ.

**28.** Procédé selon l'une quelconque des revendications 24 à 27, **caractérisé en ce que** le traitement du polycondensat fondu à l'extérieur de l'extrudeuse comprend une filtration de la masse fondue.

**29.** Procédé selon l'une quelconque des revendications 24 à 28, **caractérisé en ce que** le traitement du polycondensat fondu à l'extérieur de l'extrudeuse comprend l'utilisation d'une pompe à masse fondue.

**30.** Procédé selon l'une quelconque des revendications 17 à 29, **caractérisé en ce que** lors du durcissement, le polycondensat est transformé en un granulat constitué de pellets.